# EUROPÄISCHE PATENTSCHRIFT

(11) **EP 1 002 047 B1**
(45) Veröffentlichungstag und Bekanntmachung des Hinweises auf die Patenterteilung: **24.09.2003**
(21) Anmeldenummer: 98942469.2
(22) Anmeldetag: 01.07.1998
(51) Int. Cl.: C12C 7/17

(54) **SENKBODEN FÜR EINEN LÄUTERBOTTICH**
FALSE BOTTOM FOR A STRAINING VAT
FAUX FOND POUR UNE CUVE-FILTRE

(30) Priorität: 08.07.1997 DE 19729029
(43) Veröffentlichungstag der Anmeldung: 24.05.2000
(73) Patentinhaber: Hrch. Huppmann GmbH, 97318 Kitzingen (DE)
(72) Erfinder: ASBECK, Franz, D-97357 Prichsenstadt (DE); LENZ, August, D-97318 Kitzingen (DE)
(74) Vertreter: Böck, Bernhard, Dipl.-Ing.
(86) Internationale Anmeldenummer: DE9801808
(87) Internationale Veröffentlichungsnummer: WO99002644

(56) Entgegenhaltungen:
- DE-A- 2 035 954
- DE-A- 2 361 291
- DE-A- 2 429 144
- DE-C- 139 212
- DE-C- 159 777

## Beschreibung

Die Erfindung betrifft einen Senkboden nach dem Oberbegriff des Patentanspruchs 1.

Senkböden der in Rede stehenden Art finden in einem Läuterbottich zur Bierherstellung Verwendung. Der Senkboden ist dabei in einem definierten Abstand vom Läuterbottichboden in den Läuterbottich eingelegt und dient zur tragenden Aufnahme des während des Läuterns aus der Maische zurückbleibenden Trebers unter Bildung eines sogenannten Treberkuchens. Gleichzeitig muss jedoch sichergestellt sein, dass die durch den Treber hindurchtretende Würze abfließen und aus dem Läuterbottich abgezogen werden kann. Dazu weist der Senkboden Durchgangsöffnungen in Form von Schlitzen, Spalten oder Löchern auf, die zum einen einen möglichst ungehinderten Durchlauf der Würze erlauben und zum anderen aber ein Passieren des Trebers oder Teilen desselben verhindern sollen. Die Durchgangsöffnungen sind daher vergleichsweise klein.

Eine besondere Form des Senkbodens ist der sogenannte Spaltsiebboden, bei dem Rostelemente auf einem Rahmen derart angeordnet sind, dass zwischen jeweils zwei benachbarten Rostelementen eine spaltartige Durchgangsöffnung gebildet wird. Ein solcher Senkboden ist aus der DE 20 35 954 bekannt.

Nach dem Abläutern muß der auf dem Senkboden befindliche Treber aus dem Läuterbottich entfernt werden. Dies geschieht durch eine oder mehrere im Läuterbottichboden und Senkboden angeordnete offen- und verschließbare Austreberöffnungen, wobei mit Treberschaufeln oder Austreberscheiten der Treber vom Senkboden abgestreift und in die Austreberöffnungen geschoben wird. Nachteilig ist dabei, daß beim Abstreifen Treberreste in die Durchgangsöffnungen bzw. die Spaltöffnungen gelangen, wodurch ein häufiges Reinigen der Spalte mit Wasser und/oder Reinigungssäuren und/oder -laugen notwendig wird. Ebenfalls wird mit zunehmender Sudzahl die freie Durchgangsfläche stetig verringert, was unter anderem zu längeren Abläuterzeiten führen kann.

Ausgehend von diesem Stand der Technik ist es die Aufgabe der vorliegenden Erfindung, einen Senkboden der eingangs genannten Art zu schaffen, der insbesondere beim Ausräumen des Trebers eine geringere Verschmutzungsanfälligkeit aufweist.

Diese Aufgabe wird durch einen Senkboden nach der Lehre des Patentanspruchs 1 gelöst.

Vorteilhafte Ausgestaltungen der Erfindung sind Gegenstand der Unteransprüche.

Der Senkboden für einen Läuterbottich gemäß der vorliegenden Erfindung weist zunächst in an sich bekannter Weise eine Vielzahl von stabartigen Rostelementen auf, die an einem rahmenartigen Grundkörper derart angeordnet sind, daß die Rostelemente eine im wesentlichen ebene Senkbodenfläche definieren, wobei jeweils zwischen zwei benachbarten Rostelementen eine spaltartige Durchgangsöffnung gebildet wird. Die Rostelemente weisen eine im wesentlichen ebene Oberfläche auf. Im Gegensatz zu den bekannten Senkböden sind jedoch crfindungsgemäß die Oberflächen, d.h. die den Treber aufnehmenden Oberflächen, gegenüber der Senkbodenfläche gleichsinnig derart geneigt, daß die zueinander weisenden, die Durchgangsöffnung begrenzenden Kanten der Oberflächen jeweils zweier benachbarter Rostelemente bezüglich der Senkbodenebene gegeneinander versetzt sind.

Dies bedeutet mit anderen Worten, daß zwar insgesamt durch die Rostelemente bzw. deren Oberflächen eine ebene Senkbodenfläche gebildet wird, diese jedoch im Gegensatz zum Stand der Technik ein im Querschnitt asymmetrisch sägezahnartig gerastertes Profil mit im wesentlichen gleichsinnig rampenartig geneigten Rostelementoberflächen aufweist. Wenn nun beim Austrebern das Austreberscheit im wesentlichen in Richtung des Anstiegs der rampenartig geneigten Oberflächen über den Senkboden bewegt wird, erfolgt ein Schieben des Trebers über die Rampen auf die jeweils nächste rampenartige Oberfläche, wobei die eigentlichen Spaltöffnungen im Bewegungsschatten liegen. Dadurch unterliegen die Spaltöffnungen einer signifikant reduzierten Verschmutzung, wodurch sich die Standzeit, d. h. die Zeit zwischen zwei notwendigen Reinigungsvorgängen, ebenfalls erhöht. Dies ermöglicht weiter eine deutliche Reduzierung des Verbrauchs an Wasser und/oder Reinigungssäure und/oder -lauge.

In grundsätzlich beliebiger Weise können die Neigungswinkel der Rostelemente bzw. deren Oberflächen örtlich unterschiedlich sein. Beispielsweise kann der Neigungswinkel in Bereichen, in denen eine geringere Verschmutzungsgefahr besteht, geringer sein. Vorzugsweise jedoch sind die Neigungswinkel sämtlicher Rostelemente im wesentlichen gleich. Dadurch ergibt sich eine quasi-homogene bzw. quasi-ebene Senkbodenoberfläche.

Nach einem weiteren Ausführungsbeispiel können die Rostelemente in ihrem Neigungswinkel gegenüber der Senkbodenebene verstellbar ausgebildet sein, wobei die Verstellung beispielsweise auch motorisch erfolgen kann. Die Verstellung kann dadurch erfolgen, daß die Rostelemente um ihre Längsmittelachse verschwenkbar am jeweiligen Rahmen angelenkt sind.

Die Rostelemente können eine im wesentlichen beliebige Querschnittsform aufweisen, solange zum einen eine im wesentlichen ebene, den Treber aufnehmende Oberfläche und zum anderen ein zum Abfluß der Würze genügend großer Spalt zwischen jeweils zwei benachbarten Rostelementen sichergestellt ist. Nach einem besonders bevorzugten Ausführungsbeispiel weisen die Rostelemente im Querschnitt einen an die Oberfläche anschließenden ersten Bereich mit im wesentlichen rechteckiger oder quadratischer Querschnittsfläche, einen zweiten Bereich mit abgerundeter oder im wesentlichen kreisabschnittsförmiger Querschnittsfläche und einen dritten, die beiden ersten Bereiche verbindenden Bereich mit sich im wesentlichen trapezförmig vom ersten zum zweiten Bereich verjüngender Querschnittsfläche auf. Dadurch wird zum einen ein Spalt geringer, den Treber zurückhaltender definierter Eintrittsbreite zur Verfügung gestellt und zum anderen wird der Abfluß der Würze durch die sich ergebende Querschnittserweiterung des Spaltes verbessert.

Wenngleich in grundsätzlich beliebiger Weise die Rostelemente unterschiedliche Querschnitte aufweisen können, sind vorzugsweise sämtliche Rostelemente mit zumindest im wesentlichen gleichem Querschnitt ausgestattet.

Eine für den Abzug der Würze besonders vorteilhafte Form des Spaltes ergibt sich, wenn die Rostelemente derart ausgebildet und angeordnet sind, daß die jeweils zwischen zwei Rostelementen gebildete Durchgangsöffnung im Querschnitt eine im wesentlichen umgekehrt trichterförmige. d.h. sich nach unten trichterförmig erweiternde Gestalt aufweist.

Gemäß einem weiteren Ausführungsbeispiel eines erfindungsgemäßen Senkbodens sind sämtliche Rostelemente im wesentlichen parallel zueinander verlaufend angeordnet. Dies ist insbesondere dann von Vorteil, wenn das Austrebern mit linear bewegbarem Austreberscheit erfolgt, wobei dann die Austreberrichtung vorzugsweise senkrecht zur Längsachse der Rostelemente erfolgt.

Der Senkboden kann, ohne den Boden der Erfindung zu verlassen, einstückig im wesentlichen den gesamten Läuterbottichboden überdeckend ausgeführt sein. Gemäß einem besonders bevorzugten Ausführungsbeispiel der Erfindung jedoch weist der Senkboden mindestens zwei Senkbodenelemente mit jeweils einem rahmenartigen Grundkörper auf, auf oder an dem die Rostelemente angeordnet sind. Dadurch läßt sich der Senkboden in einfacher Weise baukasten- oder modulartig vorfertigen, montieren und demontieren.

Die äußere Form des Senkbodens wird in aller Regel der Form des jeweilgen Läuterbottichs angepaßt sein, um eine vollständige Abdeckung des Läuterbottichbodens zu erzielen. Gemäß einem bevorzugten Ausführungsbeispiel ist daher der Senkboden im wesentlichen kreisförmig oder kreis-ringförmig ausgebildet. wobei die Senkbodenelemente als Senkbodensegmente ausgebildet sind.

Die Rostelemente der Senkbodenelemente oder Senkbodensegmente können in der eingangs beschrieben Weise nach einem bevorzugten Ausführungsbcispiel wiederum zueinander im wesentlichen parallel verlaufen.

Wenn die Senkbodenelemente als Senkbodensegmente ausgeführt sind, können nach einem besonders bevorzugten Ausführungsbeispiel der Erfindung die Rostelemente entweder im wesentlichen parallel zur Mittelradialachse des Senkbodensegmentes oder einer radialen Seitenkante des jeweiligen Senkbodensegmentes verlaufen.

Im folgenden wird die Erfindung anhand lediglich Ausführungsbeispiele zeigender Zeichnungen näher erläutert. Es zeigt
- **Fig. 1**: in schematischer nicht maßstäblicher geschnittener Teildarstellung einen Ausschnitt aus einem erfindungsgemäßen Senkboden;
- **Fig. 2**: ins schematischer Darstellung in Ansicht von oben ein Senkbodensegment gemäß vorliegender Erfindung; und
- **Fig. 3**: in einer der **Fig. 2** entsprechenden Darstellung ein weiteres Ausführungsbeispiel eines erfindungsgemäßen Senkbodensegmentes.

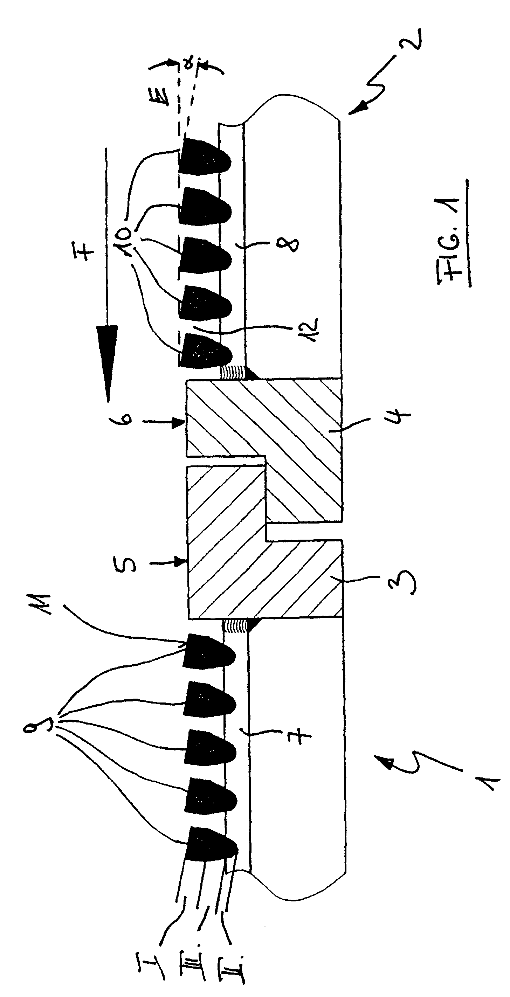

In **Fig. 1** ist schematisch ein Ausschnitt aus einem erfindungsgemäßen Senkboden 1 dargestellt. Der Senkboden weist eine Mehrzahl von Senkbodenelementen auf, von denen aus Gründen einer klareren Darstellung in **Fig. 1** lediglich die zwei Senkbodenelemente 1 und 2 dargestellt sind. Die Senkbodenelemente 1 und 2 weisen jeweils einen rahmenartigen Grundkörper 3 bzw. 4 auf, der die Senkbodenelemente 1 und 2 im wesentlichen geschlossen umläuft. Die zueinander weisenden Rahmenprofile 5 und 6 der Grundkörper 3 und 4 sind im wesentlichen zueinander komplementär L-förmig gestaltet und greifen ineinander ein, wenn der Senkboden in einen nicht dargestellten Läuterbottich eingebaut ist. Dadurch ergibt sich eine würze- und treberdichte Verbindung der Senkbodenelemente 1 und 2 mit ihren jeweiligen Nachbarn.

Zwischen den Rahmenprofilen 3 des ersten Senkbodenelementes 1 bzw. den Rahmenprofilen 4 des Senkbodenelementes 2 verlaufen jeweils Querträger 7 bzw. 8, die an den Rahmenprofilen 3 bzw. 4 angeschweißt sind. An den Querträgern 7 und 8 sind jeweils eine Vielzahl von Rostelementen 9 bzw. 10 angeordnet, beispielsweise angeschweißt. Die Rostelemente 9 bzw. 10 verlaufen in der Darstellung nach **Fig. 1** senkrecht zur Zeichenebene. Zwischen zwei jeweils benachbarten Rostelementen 9, 10 wird ein ebenfalls senkrecht zur Zeichenebene verlaufender Spalt 12 gebildet, der als Durchgangsöffnung für die geläuterte Würze dient.

Die Rostelemente 9, 10 weisen jeweils eine Oberfläche 11 auf, auf der beim Abläutern der Treber aufgelagert wird. Erfindungsgemäß sind die Oberflächen 11 gegenüber der Senkbodenebene E gleichsinnig um den Winkel α geneigt, so daß sich eine schwach rampenförmige Anordnung der Oberflächen 11 ergibt. Beim Austreiben des Trebers mittels eines nicht dargestellten Treberscheits in Richtung F wird der auf den Oberflächen 11 befindliche Treber in Richtung F gefördert, wobei aufgrund der Anordnung der Spalte 12 im "Bewegungsschatten" der Anteil des Trebers, der in die Spalte gelangt, verringert ist.

Die Rostelemente 9, 10 weisen im Querschnitt drei Bereiche auf. Bereich I weist dabei einen im wesentlichen rechteckigen Querschnitt, Bereich II einen im wesentlichen kreisabschnittsförmigen Querschnitt und Bereich III einen im wesentlichen trapezförmigen Querschnitt auf. Aufgrund dieser Gestaltung ergibt sich ein Spalt 12, der im oberen Bereich zunächst mit konstanter Querschnittsbreite verläuft und sich dann nach unten trichterartig erweitert.

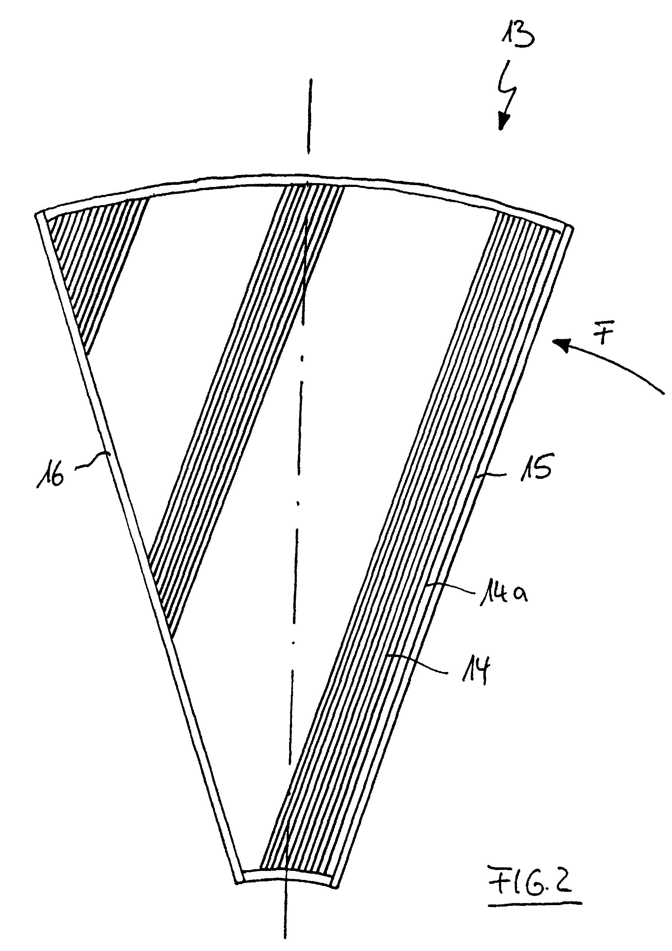

In **Fig. 2** ist ein im wesentlichen kreissegmentförmiges Senkbodenelement 13 dargestellt. Auch bei diesem Ausführungsbeispiel verlaufen die Rostelemente 14 parallel zueinander und im weiteren parallel zu einer sich in radialer Richtung, bezogen auf die Gestalt des gesamten Senkbodens, des Senkbodensegmentes erstreckenden Seitenkante 15. Bei diesem Ausführungsbeispiel wird beim Austrebern in Richtung F lediglich das erste Rostelement 14a senkrecht mit dem Treber angefördert, während mit zunehmendem Fortschreiten der Bewegung der kreisbogenförmigen Bewegung des nicht dargestellten Austreberscheits ein spitzwinkliges Anfördern der Rostelemente erfolgt. Bei Erreichen der zweiten Seitenkante 16 und damit der ersten Seitenkante des nicht dargestellten unmittelbar anschließenden, im wesentlichen identisch ausgebildeten Senkbodensegmentes erfolgt wiederum ein senkrechtes Anfördern usw..

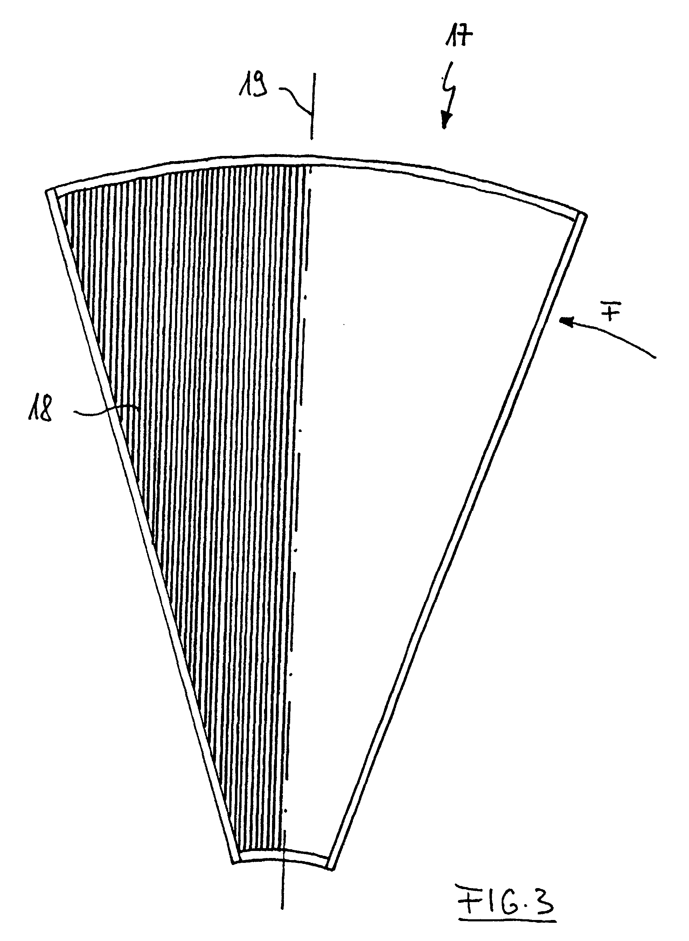

Das Senkbodensegment 17 nach **Fig. 3** entspricht im wesentlichen dem Senkbodensegment 13 nach **Fig. 2**, doch verlaufen die Rostelemente 18 sämtlich parallel zur Mittelradialachse 19 des Senkbodensegemntes 17. Bei dieser Gestaltung ist die maximale Abweichung gegenüber der idealen senkrechten Anförderrichtung F im Vergleich mit dem Ausführungsbeispiel nach **Fig. 2** halbiert.

## Patentansprüche

1. Senkboden für einen Läuterbottich mit einer Vielzahl von stabartigen Rostelementen, die an einem rahmenartigen Grundkörper derart angeordnet sind, daß die Rostelemente eine im wesentlichen ebene Senkbodenfläche definieren, wobei jeweils zwischen zwei benachbarten Rostelementen eine spaltartige Durchgangsöffnung gebildet wird,
**dadurch gekennzeichnet,**
**daß** die Rostelemente (9, 10) im wesentlichen ebene Oberflächen aufweisen, die gegenüber der Senkbodenfläche gleichsinnig derart geneigt sind, daß die zueinander weisenden, die Durchgangsöffnung (12) begrenzenden Kanten der Oberflächen jeweils zweier benachbarter Rostelemente bezüglich der Senkbodenebene (E) gegeneinander versetzt sind.

2. Senkboden nach Anspruch 1,
**dadurch gekennzeichnet,**
**daß** der Neigungswinkel (∝) sämtlicher Rostelemente im wesentlichen gleich ist.

3. Senkboden nach Anspruch 1 oder 2,
**dadurch gekennzeichnet,**
**daß** die Rostelemente (9, 10) in ihrem Neigungswinkel (∝) gegenüber der Senkbodenebene (E) verstellbar sind.

4. Senkboden nach einem der Ansprüche 1 bis 3,
**dadurch gekennzeichnet,**
**daß** die Rostelemente (9, 10) im Querschnitt einen an die Oberfläche anschließenden ersten Bereich mit im wesentlichen rechteckiger oder quadratischer Querschnittsfläche, einen zweiten Bereich mit abgerundeter oder im wesentlichen kreisabschnittsförmiger Querschnittsfläche und einen dritten, die beiden ersten Bereiche verbindenden Bereich mit sich im wesentlichen trapezförmig vom ersten zum zweiten Bereich verjüngender Querschnittsfläche aufweisen.

5. Senkboden nach einem der Ansprüche 1 bis 4,
**dadurch gekennzeichnet,**
**daß** sämtliche Rostelemente (9, 10) zumindest im wesentlichen den gleichen Querschnitt aufweisen.

6. Senkbodcn nach einem der Ansprüche 1 bis 5,
**dadurch gekennzeichnet,**
**daß** die Rostelemente (9, 10) derart ausgebildet und angeordnet sind, daß die jeweils zwischen zwei Rostelementen gebildete Durchgangsöffnung (12) im Querschnitt eine im wesentlichen umgekehrt trichterförmige Gestalt aufweist.

7. Senkboden nach einem der Ansprüche 1 bis 6,
**dadurch gekennzeichnet,**
**daß** sämtliche Rostelemente (9, 10) im wesentlichen parallel zueinander verlaufend angeordnet sind.

8. Senkboden nach einem der Ansprüche 1 bis 6,
**dadurch gekennzeichnet,**
**daß** der Senkboden mindestens zwei Senkbodenelemente (1, 2) mit jeweils einem rahmenartigen Grundkörper (3, 4) aufweist, auf oder an dem die Rostelemente (9, 10) angeordnet sind.

9. Senkboden nach Anspruch 8,
**dadurch gekennzeichnet,**
**daß** der Senkboden im wesentlichen kreis- oder kreisringförmig ist und die Senkbodenelemente (1, 2) als Senkbodensegmente ausgebildet sind.

10. Senkboden nach einem der Ansprüche 8 oder 9,
**dadurch gekennzeichnet,**
**daß** die Rostelemente (9, 10) der Senkbodenelemente (1, 2) oder Senkbodensegmente zueinander im wesentlichen parallel verlaufen.

11. Senkboden nach Anspruch 9 und 10,
**dadurch gekennzeichnet,**
**daß** die Rostelemente (9, 10) im wesentlichen parallel zur Mittelradialachse (19) oder einer radialen Seitenkante (15, 16) des jeweiligen Senkbodensegmentes verlaufen.

## Claims

1. Strainer for a clarifying vat with a multiplicity of bar-like grid elements which are arranged on a frame-like basic body in such a way that the grid elements define a substantially flat strainer surface, a slot-like through-opening being formed between two adjacent grid elements in each case,
**characterized in that**
the grid elements (9, 10) have substantially flat surfaces which are inclined in the same direction with respect to the surface of the strainer in such a way that the edges, which face each other and limit the through-opening (12), of the surfaces of two adjacent grid elements in each case are offset with respect to each other in respect of the strainer plane (E).

2. Strainer according to Claim 1,
**characterized in that**
the angle of inclination (α) of all grid elements is substantially identical.

3. Strainer according to Claim 1 or 2,
**characterized in that**
the grid elements (9, 10) are adjustable in their angle of inclination (α) with respect to the strainer plane (E).

4. Strainer according to one of Claims 1 to 3,
**characterized in that**
in cross-section the grid elements (9, 10) have a first region adjoining the surface with a substantially rectangular or square cross-sectional area, a second region with a rounded-off or substantially circle-segment-shaped cross-sectional area and a third region connecting the first two regions with a cross-sectional area which tapers from the first to the second region in substantially trapezium-shaped manner.

5. Strainer according to one of Claims 1 to 4,
**characterized in that**
all grid elements (9, 10) have at least substantially the same cross-section.

6. Strainer according to one of Claims 1 to 5,
**characterized in that**
the grid elements (9, 10) are designed and arranged in such a way that the through-opening (12) formed between two grid elements in each case has, in cross-section, a form which is substantially inverted funnel-shaped.

7. Strainer according to one of Claims 1 to 6,
**characterized in that**
all grid elements (9, 10) are arranged running substantially parallel to each other.

8. Strainer according to one of Claims 1 to 6,
**characterized in that**
the strainer has at least two strainer elements (1, 2), in each case with a frame-like basic body (3, 4) on or to which the grid elements (9, 10) are arranged.

9. Strainer according to Claim 8,
**characterized in that**
the strainer is substantially circular or annular in shape and the strainer elements (1, 2) are designed as strainer segments.

10. Strainer according to one of Claims 8 or 9,
**characterized in that**
the grid elements (9, 10) of the strainer elements (1, 2) or strainer segments run substantially parallel to each other.

11. Strainer according to Claim 9 and 10,
**characterized in that**
the grid elements (9, 10) run substantially parallel to the centre radial axis (19) or a radial side edge (15, 16) of the respective strainer segment.

## Revendications

1. Fond de descente pour une cuve à filtration avec une multitude d'éléments de grille semblables à des tiges, lesquels sont aménagés sur un corps de base semblable à un cadre de manière à ce que les éléments de grille définissent une surface du fond de descente essentiellement plane, moyennant quoi une ouverture de transit semblable à une fente est formée entre respectivement deux éléments de grille voisins, **caractérisé en ce que** les éléments de grille (9, 10) présentent des surfaces essentiellement planes, lesquelles sont inclinées dans le même sens par rapport à la surface du fond de descente de manière à ce que les arrêtes des surfaces de respectivement deux éléments de grille voisins lesquelles pointent les unes vers les autres et délimitent l'ouverture de transit (12) sont décalées les unes par rapport aux autres par rapport au plan du fond de descente (E).

2. Fond de descente selon la revendication 1, **caractérisé en ce que** l'angle d'inclinaison (α) de l'ensemble des éléments de grille est essentiellement le même.

3. Fond de descente selon les revendications 1 ou 2, **caractérisé en ce que** les éléments de grille (9, 10) sont réglables par rapport au plan du fond de descente (E) selon leur angle d'inclinaison (α).

4. Fond de descente selon l'une quelconque des revendications 1 à 3, **caractérisé en ce que** les éléments de grille (9, 10) présentent en coupe transversale une première zone en jonction avec la surface avec une superficie de la section essentiellement rectangulaire ou carrée, une deuxième zone avec une superficie de la section arrondie ou essentiellement en forme de segment de cercle et une troisième zone reliant les deux premières zones avec une superficie de la section essentiellement en forme de trapèze décroissant de la première à la deuxième zone.

5. Fond de descente selon l'une quelconque des revendications 1 à 4, **caractérisé en ce que** tous les éléments de grille (9, 10) présentent au moins pour l'essentiel le même profil transversal.

6. Fond de descente selon l'une quelconque des revendications 1 à 5, **caractérisé en ce que** les éléments de grille (9, 10) sont formés et aménagés de manière à ce que l'ouverture de transit (12) formée respectivement entre deux éléments de grille, présente en coupe transversale une forme essentiellement d'entonnoir inversé.

7. Fond de descente selon l'une quelconque des revendications 1 à 6, **caractérisé en ce que** tous les éléments de grille (9, 10) sont aménagés essentiellement de manière parallèle les uns par rapport aux autres.

8. Fond de descente selon l'une quelconque des revendications 1 à 6, **caractérisé en ce que** le fond de descente présente au moins deux éléments de fonds de descente (1, 2) avec respectivement un corps de base (3, 4) semblable à un cadre sur lequel ou contre lequel sont aménagés les éléments de grille (9, 10).

9. Fond de descente selon la revendication 8, **caractérisé en ce que** le fond de descente est essentiellement de forme ronde ou en forme d'anneau de cercle, et **en ce que** les éléments de fond de descente (1, 2) sont formés à la manière de segments de fonds de descente.

10. Fond de descente selon les revendications 8 ou 9, **caractérisé en ce que** les éléments de grille (9, 10) des éléments de fond de descente (1, 2) ou segments de fond de descente s'étendent essentiellement parallèlement les uns par rapport aux autres.

11. Fond de descente selon les revendications 9 ou 10, **caractérisé en ce que** les éléments de grille (9, 10) s'étendent essentiellement parallèlement à l'axe radial du milieu (19) ou à une arrête latérale radiale (15, 16) du segment de fond de descente respectif.
